# EUROPEAN PATENT APPLICATION

(11) **EP 4 700 356 A1**
(43) Date of publication of application: **25.02.2026**
(21) Application number: 25196636.2
(22) Date of filing: 19.08.2025
(51) Int. Cl.: G01M 99/00, G01M 5/00

(54) **TESTING APPARATUS FOR A REMOVABLE PORTION OF A FURNITURE, AND A METHOD FOR TESTING THE REMOVABLE PORTION**

(30) Priority: 19.08.2024 SG 10202402518
(71) Applicant: Secretlab SG Pte. Ltd., 579713 Singapore (SG)
(72) Inventor: LYE, Jason Jie Shen, 579713 SINGAPORE (SG)
(74) Representative: Viering, Jentschura & Partner mbB Patent- und Rechtsanwälte

(57) **Abstract**

Various embodiments relate to a testing apparatus for a removable portion of a furniture or furniture piece, the test apparatus comprising a holder configured to position the removable portion for testing; and an arm assembly comprising a load, the arm assembly configured to move the load to exert a first force on the removable portion; wherein the load is shaped and/or textured to simulate a part of a human body, and wherein the first force is applied along a first axis of the removable portion.

## Description

### TECHNICAL FIELD

The disclosure relates to a testing apparatus and a method of testing a removable portion of furniture or furniture piece. In some embodiments, the furniture may be a chair, and the removable portion may be an armrest of the chair.

### BACKGROUND

The following discussion of the background is intended to facilitate an understanding of the present disclosure only. It should be appreciated that the discussion is not an acknowledgment or admission that any of the material referred to was published, known, or is part of the common general knowledge of the person skilled in the art in any jurisdiction as of the priority date of the disclosure.

As part of quality control, furniture and parts thereof typically undergo various tests. It is not uncommon for removably attachable/detachable parts of a furniture, such as armrests, to undergo specific load or stress tests.

Current conventional testing apparatus and testing methods are however inadequate to replicate market failures or simulate accurate usage pattern(s) of the furniture by a user. Consequently, such testing apparatus and testing methods may not be suitable for relatively softer armrest made of specific materials, such as relatively softer polyurethane (PU).

Accordingly, there exists a need for a testing apparatus and method of testing, that seek to address at least one of the aforementioned problems.

### SUMMARY

A technical solution is provided in the form of a testing apparatus and/or a method of testing that is able to replicate and simulate a furniture user's load-bearing motion on the removable portion, and therefore replicate market failures for benchmarking and improvement purposes. In some embodiments, the testing apparatus comprises a portion that simulates the interaction of a human elbow on an armrest of a chair.

According to an aspect of the present disclosure, there is a testing apparatus for a removable portion of a furniture (or furniture piece), the test apparatus comprising a holder configured to position the removable portion for testing; and an arm assembly comprising a load, the arm assembly configured to move the load to exert a first force on the removable portion; wherein the load is shaped and/or textured to simulate a part of a human body, and wherein the first force is applied along a first axis of the removable portion.

In an embodiment, the load is configured to exert a second force on the removable portion in a second direction, and wherein the second direction is different from the first direction.

In an embodiment, the holder comprises a clamp to hold the removable portion in place during testing.

In an embodiment, the arm assembly comprises an elevated structure, a pneumatic arm, and a rail; wherein the rail is mounted onto the elevated structure at an elevation from the holder, and pneumatic arm is mounted onto the rail for moving the pneumatic arm along an axis defined by the rail.

In an embodiment, the load is configured to exert the first force of 100 Newtons on the removable portion.

In an embodiment, the load is formed from steel or silicone.

In an embodiment, the testing apparatus further comprising a programmable logic controller (PLC), the PLC configured to control the movement of the pneumatic arm to exert the first force.

In an embodiment, the PLC comprises a digital counter, the digital counter configured to count a number of times the load exerts the first force on the removable portion and compare the number of times with a pre-determined number.

In an embodiment, the PLC is configured to provide at least one of a visual and audio notification when the number of times exceeds the pre-determined number.

In an embodiment, the furniture is a chair, and the removable portion is an armrest portion.

In an embodiment, the armrest portion comprises a cushioned portion.

In an embodiment, the cushioned portion is formed from or of polyurethane.

According to another aspect of the present disclosure, there is provided a method for testing a removable portion of a furniture, the method comprising providing a holder, the holder configured to position the removable portion for testing; and providing an arm assembly comprising a load, the arm assembly configured to move the load to exert a first force on the removable portion; wherein the load is shaped and/or textured to simulate a part of a human body, and wherein the first force is applied along a first axis of the removable portion.

In an embodiment, the method may further comprise configuring the load to exert a second force on the removable portion in a second direction, and wherein the second direction is different from the first direction.

In an embodiment, the holder comprises a clamp to hold the removable portion in place during testing.

In an embodiment, the load is configured to exert the first force of 100 Newtons on the removable portion.

In an embodiment, the load is formed from or of steel or silicone.

In an embodiment, the method further comprises providing a programmable logic controller (PLC), the PLC configured to control the movement of the pneumatic arm to exert the first force.

In an embodiment, the method further comprises configuring the digital counter to count a number of times the load exerts the first force on the removable portion and compare the number of times with a pre-determined number.

In an embodiment, the method further comprises configuring the PLC to provide at least one of a visual and audio notification when the number of times exceeds the pre-determined number.

### BRIEF DESCRIPTION OF THE DRAWINGS

In the drawings, like reference characters generally refer to the same parts throughout the different views. The drawings are not necessarily to scale, emphasis instead generally being placed upon illustrating the principles of the invention. In the following description, various embodiments are described with reference to the following drawings, in which:
FIG. 1 shows a perspective view of a testing apparatus for a removable portion of a furniture piece according to various embodiments.
FIG. 2A and FIG. 2B show perspective views of a load portion, the load portion simulating a human elbow, according to various embodiments.
FIG. 3A and FIG. 3B show perspective views of a holder without a removable portion and with a removable portion, respectively, according to some embodiments.
FIG. 4 is a flow chart of a method of testing a removable portion of furniture, according to various embodiments.
FIG. 5A shows a test setup of using the testing apparatus for performing a horizontal shearing test on a test sample, such as an armrest; FIG. 5B illustrates a compressed state of the armrest under testing; and FIG. 5C illustrates a delamination state of the test sample, indicating that the test sample may have failed the horizontal shearing test.

### DESCRIPTION

The following detailed description refers to the accompanying drawings that show, by way of illustration, specific details and embodiments in which the disclosure may be practiced. These embodiments are described in sufficient detail to enable those skilled in the art to practice the disclosure. Other embodiments may be utilized and structural, and logical changes may be made without departing from the scope of the disclosure. The various embodiments are not necessarily mutually exclusive, as some embodiments can be combined with one or more other embodiments to form new embodiments.

The disclosure illustratively described herein may suitably be practiced in the absence of any element or elements, limitation or limitations, not specifically disclosed herein. Thus, for example, the terms "comprising", "including," containing", etc. shall be read expansively and without limitation. The word "comprise" or variations such as "comprises" or "comprising" will accordingly be understood to imply the inclusion of a stated integer or groups of integers but not the exclusion of any other integer or group of integers. Additionally, the terms and expressions employed herein have been used as terms of description and not of limitation, and there is no intention in the use of such terms and expressions of excluding any equivalents of the features shown and described or portions thereof, but it is recognized that various modifications are possible within the scope of the disclosure. Thus, it should be understood that although the present disclosure has been specifically described in exemplary embodiments and optional features, modification and variation of the disclosure embodied herein may be resorted to by those skilled in the art.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the" as used with regard to a feature or element include a reference to one or more of the features or elements. As used herein, the term "and/or" includes any and all combinations of one or more of the associated listed items. In addition, the singular terms "a", "an", and "the" include plural references unless context clearly indicates otherwise. Similarly, the word "or" is intended to include "and" unless the context clearly indicates otherwise.

In the context of various embodiments, terms such as "first", "second" etc., may be used to describe various elements, such elements are not limited to the above terms. The above terms are used only to distinguish one element from another, and do not define an order and/or significance of the elements. Without departing a scope of rights of the specification, a first element may be referred to as a second element, and similarly, the second element may be referred to as the first element.

It should be understood that the terms "on", "over", "top", "bottom", "down", "side", "back", "left", "right", "front", "lateral", "side", "up", "down" etc., when used in the following description are used for convenience and to aid understanding of relative positions or directions, and not intended to limit the orientation of any device, structure or any part of any device or structure.

In the context of various embodiments, the term "coupled" (or "connected") herein may be understood as mechanically coupled, for example attached or fixed, or just in contact without any fixation, and it will be understood that both direct coupling or indirect coupling (in other words: coupling without direct contact) may be provided.

In the context of various embodiments, the term "furniture" herein may be understood to include one or more pieces of furniture. Such one or more pieces of furniture may include a gaming chair, an ergonomic chair, or various combinations of features of such a chair.

In order that the invention may be readily understood and put into practical effect, various embodiments will now be described by way of examples and not limitations, and with reference to the figures.

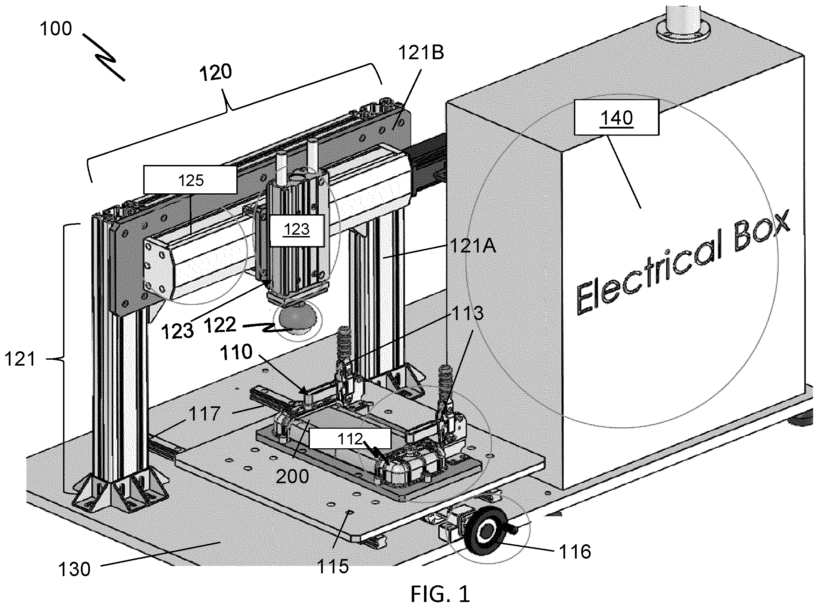

FIG. 1 shows a perspective view of a testing apparatus 100 according to various embodiments. The testing apparatus 100 may be suitable for providing different types of load tests on a removable portion 200 of a furniture piece (not shown). A non-limiting example of a load test is a horizontal shearing test. The removable portion 200 may be regarded as a test sample in the context of the present disclosure.

The test apparatus 100 may be used for load testing a removable portion 200 of a furniture piece. The test apparatus 100 may comprise a holder 110 configured to position the removable portion 200 for testing, and an arm assembly 120 comprising a load 122, the arm assembly 120 configured to move the load 122 to exert a first force 124 on the removable portion 200. The load 122 may be shaped and/or textured to simulate a part of a human body.

In some embodiments, the part of the human body to be simulated may be a human elbow. The texture may be smooth or slightly rough with one or more protrusions to simulate a bony elbow.

The first direction may be perpendicular to the surface of the removable portion, as shown.

The load 122 may further be configured to exert a second force 126 on the removable portion in a second direction. The second direction may be different from the first direction. The second direction may be along a surface of the surface of the removable portion 200.

The holder 110 may comprise one or more clamps 112 to lock or hold the removable portion 200 in a desired or suitable position for testing, i.e., to hold the removable portion 200 in place to prevent unnecessary movement of the removable portion 200 during testing.

The arm assembly 120 comprises an elevated structure 121, a pneumatic arm 123, and a rail 125; wherein the rail 125 is mounted onto the elevated structure 121 at an elevation from the holder 110 or with respect to the holder 110, and the pneumatic arm 123 is in turn mounted onto the rail 125 for moving the pneumatic arm 123 along an axis defined by the rail 125.

The elevated structure 121 may comprise two pillars 121A extending from a base 130 of the apparatus 100. A plate 121B may be positioned between the two pillars 121A, the plate 121B configured for the pneumatic arm 123 and the rail 125 to be mounted thereon. The load 122 may be attached to the pneumatic arm 123.

The testing apparatus 100 may further comprise an electrical box or unit 140. The electrical box or unit may house a programmable logic controller (PLC), the PLC configured to control the movement of the pneumatic arm to exert the first force. The PLC may be installed with software instructions, such that, when executed, perform the testing of the removable portion 200.

The testing apparatus 100 may comprise a movable base plate 115 for the holder 110 to be mounted thereon. The base plate 115 may be made moveable along a lateral axis via a pair of rails 117. The movement along the lateral axis may be adjusted by way of a rotary adjustment mechanism 116. The rotary adjustment mechanism 116 may be used for fine-tuning the movement of the base plate 115 along the lateral axis. The pair of rails 117 may be mounted on the base 130.

In some embodiments, the PLC comprises a counter, such as a digital counter, the digital counter may be configured to count the number of times the load exerts the first force on the removable portion and compare the number of times with a pre-determined number.

In some embodiments, the PLC is configured to provide at least one of a visual and audio notification when the number of times exceeds the pre-determined number.

In some embodiments, the load 122 is configured to exert the first force and/or the second force of 100 Newtons on the removable portion.

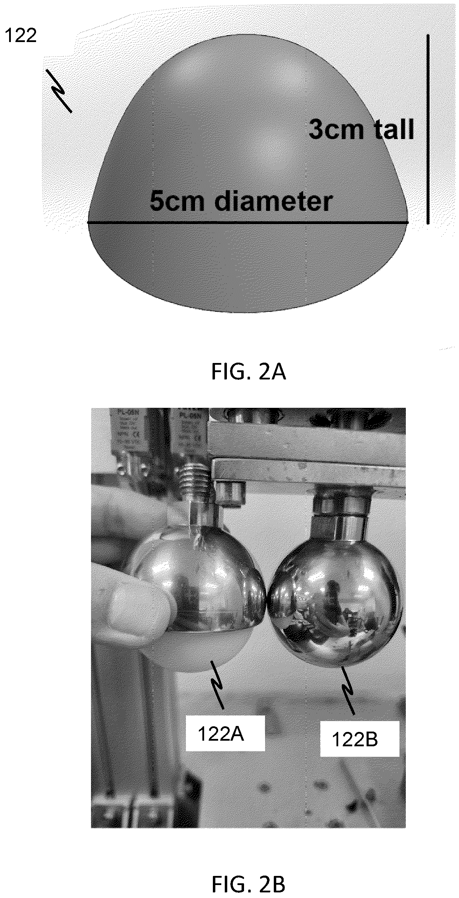

FIG. 2A and FIG. 2B illustrate an embodiment of the load 122. The load 122 may be shaped as a dome (i.e. dome-shaped), to simulate an elbow portion of a human being. The dome may preferably have a diameter of 5 centimeters (cm) and a height of 3 cm. In FIG. 2B, the load 122 may be formed from or of silicone, to mimic human skin, i.e. a silicone load 122A. Alternatively, the load 122 may be formed from or of metal, such as steel 122B, which may include stainless steel. It is appreciable that various materials (e.g. glass, wood) may be contemplated depending on the intended simulation of the type of load on the removable portion 200. In some embodiments, the selection of the various materials for the intended simulation may be based on the desired interaction on the removable portion 200.

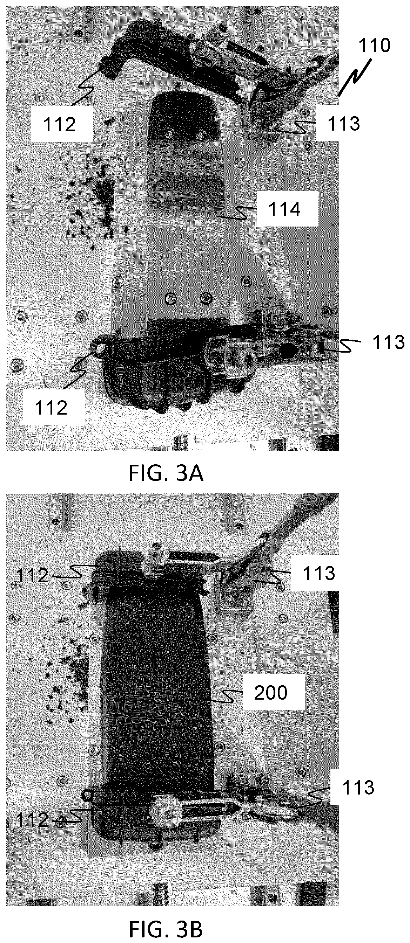

FIG. 3A and FIG. 3B shows an embodiment of a holder 110 with two clamps 112 and a base plate 114. The two clamps 112 may be mounted on the base 130 of the apparatus 100. Each clamp 112 may be pivoted about a mounting point 113 and rotatable about the mounting point 113. In addition to the rotatable movement, each clamp 112 may further be capable of tilting up and down about the mounting point 113.

In some embodiments, the pneumatic arm 123 may comprise a hydraulic unit (not shown) to slidably extend the pneumatic arm 123 from a housing. The hydraulic unit may operably receive hydraulic fluid, such that, increasing the fluid received by the hydraulic unit may urge the pneumatic arm 123 towards the holder 110 (and the removable portion 200, when in normal operation). In some embodiments, the apparatus 100 may comprise one or more pressure valves positioned to sense the pressure exerted by the pneumatic arm 123 on the removable portion 200. Each pressure valve may be configured to measure the pressure of a fluid in the pneumatic arm 123. The sensed pressure values may then be converted to force values (assuming area of load 122 known) in Newton based on derivation.

The disclosure will next be described in the context of an operation of the apparatus 100.

The pneumatic arm 123 may be activated via a series of electrical relays with the PLC to activate the pneumatic arm 123 and other moving parts when required.

As the pneumatic arm 123 moves towards the removable portion 200, which may be a removable armrest of a chair formed or of relatively softer polyurethane (PU) material, a force may be exerted on the removable portion 200 in the first direction. The first direction may be substantially perpendicular to the surface of the removable portion 200. The rail 125 may be used to facilitate the movement of the pneumatic arm 123 along the second direction.

In some embodiments, the second direction may be along the surface of the removable portion 200. The combination of the first force in the first direction and the second force in the second direction provides for a pinching motion when the load is applied at a position on the surface of the removable portion 200. This may accurately simulate a human elbow's placement on an armrest which may exert a downward force (first force) on the armrest due to the elbow's weight, and a horizontal force (second force) along the surface of the armrest due to the elbow's movement on the armrest. That is, the first force may be a compression force and the second force may be a translational force. It may be appreciable that to achieve the "pinching motion", the first force in the first direction and the second force in the second direction may be applied simultaneously at the position (e.g., with a precise stroke length) on the removable portion, via the load.

In some embodiments, the PLC may be configured to indicate a force value during testing. The force value may be derived or calculated from the sensed pressure by the pressure valves, and may be displayed on a user interface or on the pressure valves.

In some embodiments, the rotary adjustment mechanism 116 may be used for determining the precise area for testing by finetuning the position of the holder 110.

In some embodiments, the pneumatic arm 123 may be configured to allow force to be replicated realistically.

In some embodiments, the PLC may be configured to work with relays to accurately control the pneumatic arm 123 and the position of the pneumatic arm 123 during loading motion (e.g., when exerting the first and second forces), and to stop the load test when specified cycle count is completed.

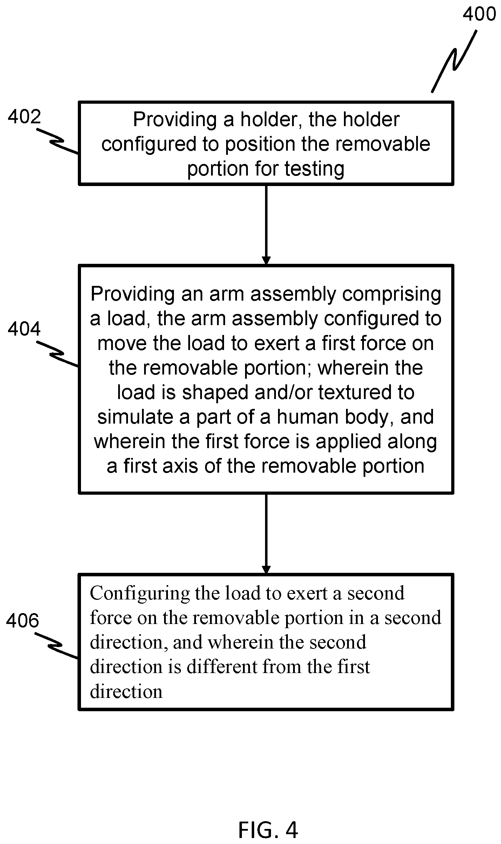

According to another aspect of the present disclosure and referring to FIG. 4, there is provided a method 400 for testing a removable portion of a furniture, the method comprising the steps of: providing a holder, the holder configured to position the removable portion for testing (step 402); and providing an arm assembly comprising a load, the arm assembly configured to move the load to exert a first force on the removable portion (step 404); wherein the load is shaped and/or textured to simulate a part of a human body, and wherein the first force is applied along a first axis of the removable portion.

As described in the earlier embodiment, the part of the human body may be an elbow.

In some embodiments, the method may further comprise configuring the load to exert a second force on the removable portion in a second direction, and wherein the second direction is different from the first direction (step 406).

It may be appreciable that the configuration of the load to exert the first force in step 404 and the second force in step 406 may be via executable software instructions, the executable software instructions may be stored in one or more computer-readable media or non-transitory computer-readable medium. Such medium or media may include any form of tangible storage device such as a hard drive, CD, DVD, USB drive, memory card, etc. In some embodiments, the non-transitory computer readable medium may be storing instructions, such that, when executed by a processor, such as the programmable logic controller, will cause the processor to execute a test using the apparatus 100.

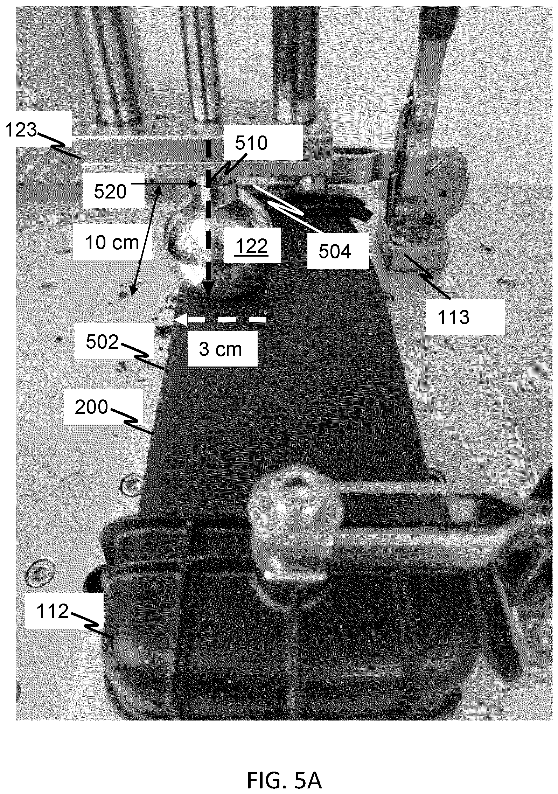

FIG. 5A shows a test setup for performing a horizontal shearing test on a removable portion 200 using the apparatus 100. Before testing, the removable portion 200 (also referred to as PU portion) may be mounted onto the holder 110 and the clamps 112 may secure the removable portion 200 to minimize movement of the PU portion 200.

The load 122, which simulates the part of the human body, such as elbow, may be placed 3 cm from a length side edge 502, and 10 cm from a width side edge 504 of the PU portion 200 as shown in FIG. 5A. The surface of the load 122 may be made of or from steel.

The first force in the first direction is indicated as "510", and the second force in the second direction is indicated as "520" in FIG. 5A.

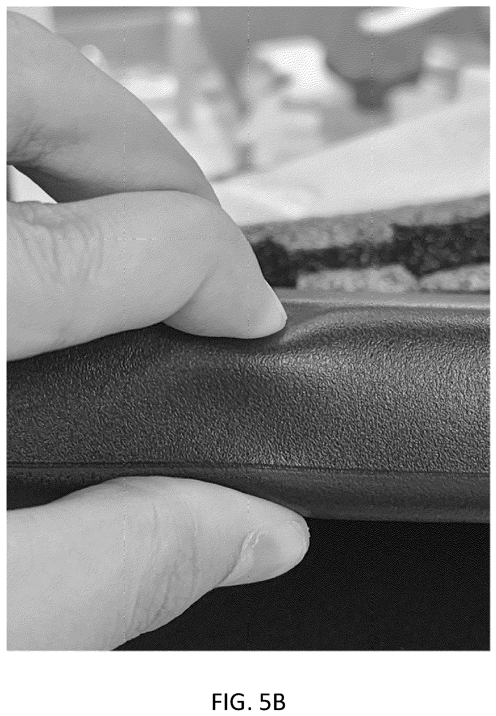

As the load 122 exerts a first force of 100 Newtons in the first direction, the PU portion 200 is checked whether it can be compressed as shown in FIG. 5B. If not, the load 122 may be shifted slightly towards the length side edge or the width side edge. In some embodiments, the first force may be in a range of 50 Newtons to 200 Newtons.

The load 122 may then be moved in a second direction along the surface of the PU portion 200 by 4 cm, with the same force of 100 Newtons towards the length side edge or the width side edge, the load is then moved upwards (i.e. removal of force of 100 Newtons from the removable portion 200), and then return to its initial position as shown in FIG. 1. This may then be counted as 1 cycle, with the static load being constantly applied in the first direction and second direction throughout. In some embodiments, the second force may be in a range of 50 Newtons to 200 Newtons.

In some embodiments, the PLC may be configured to execute the horizontal shearing test of a pre-determined cycles per minute, for example, 20-30 cycles per minute.

In some embodiments, the horizontal shearing test may be performed for a pre-determined total, for example, 4000 cycles. The PU portion is deemed to have passed the test in a positive determination that there is no chipping and delamination at the edge of the PU portion after the predetermined total of 4000 cycles. In some embodiments, the PU portion is determined to have passed the test in a positive determination that there is no abrasion marks on the PU portion surface.

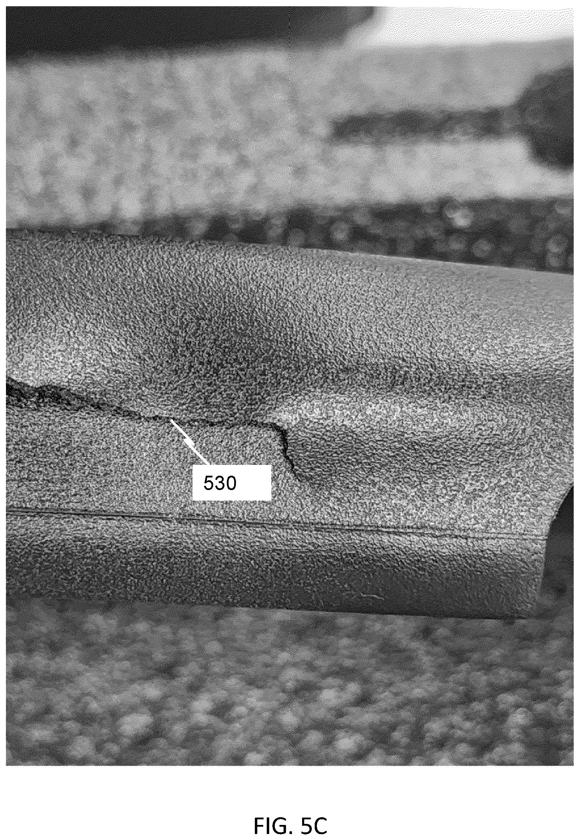

In some embodiments, the test is stopped once signs of a defect, such as a delamination 530 on a surface of the PU portion is observed (see FIG. 5C). Visual inspection may be performed at every fixed number of cycles, for example, every 500 cycles, to check for delamination or other defects.

In some embodiments, the pressure sensor (pressure valves) may be configured to translationally convert air pressure into Newtonian force measurements, but other pressure sensors such as one or more load cell sensors, may be suitable.

Various possible variations of the apparatus 100 are described as follows.

Although the apparatus 100 has been described with reference to the base 130 where various components are mounted, it may be appreciated that the base 130 may not be necessary.

In some embodiments, the electrical box or unit 140 may be configured to remotely control the operation of the pneumatic arm 123. The pneumatic arm 123 and electrical unit 140 may be equipped with wireless communication modules to transmit/receive control signals for the implementation of the load test.

It some embodiments, there may comprise a plurality of pneumatic arms 123, each pneumatic arm 123 configured to exert different forces and/or on different positions on a test sample.

In some embodiments, the load 122 may be shaped and/or textured to simulate a human knee/leg, for testing a leg rest, or a head, for testing a head rest.

While the disclosure has been particularly shown and described with reference to specific embodiments, it should be understood by those skilled in the art that various changes in form and detail may be made therein without departing from the spirit and scope of the disclosure as defined by the appended claims. The scope of the disclosure is thus indicated by the appended claims and all changes which come within the meaning and range of equivalency of the claims are therefore intended to be embraced.

## Claims

1. A testing apparatus for a removable portion of a furniture, the test apparatus comprising
a holder configured to position the removable portion for testing; and
an arm assembly comprising a load, the arm assembly configured to move the load to exert a first force on the removable portion;
wherein the load is shaped and/or textured to simulate a part of a human body, and wherein the first force is applied along a first axis of the removable portion.

2. The testing apparatus of claim 1, wherein the load is configured to exert a second force on the removable portion in a second direction, and wherein the second direction is different from the first direction, wherein the holder optionally comprises a clamp to hold the removable portion in place during testing.

3. The testing apparatus of claim 1, wherein the arm assembly comprises an elevated structure, a pneumatic arm, and a rail; wherein the rail is mounted onto the elevated structure at an elevation from the holder, and the pneumatic arm is mounted onto the rail for moving the pneumatic arm along an axis defined by the rail, and wherein the load is optionally configured to exert the first force comprising 100 Newtons on the removable portion.

4. The testing apparatus of any one of the preceding claims, wherein the load is formed from steel or silicone.

5. The testing apparatus of any one of claim 4, further comprising a programmable logic controller (PLC), the PLC configured to control the movement of the pneumatic arm to exert the first force, wherein the PLC optionally comprises a digital counter, the digital counter configured to count a number of times the load exerts the first force on the removable portion and compare the number of times with a pre-determined number.

6. The testing apparatus of claim 5, wherein the PLC is configured to provide at least one of a visual and audio notification when the number of times exceeds the pre-determined number.

7. The testing apparatus of any one of the preceding claims, wherein the furniture is a chair, and the removable portion is an armrest portion.

8. The testing apparatus of claim 7, wherein the armrest portion comprises a cushioned portion.

9. The testing apparatus of claim 8, wherein the cushioned portion is formed from or of polyurethane.

10. A method for testing a removable portion of a furniture, the method comprising
providing a holder, the holder configured to position the removable portion for testing; and
providing an arm assembly comprising a load, the arm assembly configured to move the load to exert a first force on the removable portion;
wherein the load is shaped and/or textured to simulate a part of a human body, and wherein the first force is applied along a first axis of the removable portion.

11. The method of claim 10, further comprises configuring the load to exert a second force on the removable portion in a second direction, and wherein the second direction is different from the first direction, wherein the holder optionally comprises a clamp to hold the removable portion in place during testing.

12. The method of claim 10, wherein the load is configured to exert the first force of 100 Newtons on the removable portion.

13. The method of any one of claims 10 to 12, wherein the load is formed from steel or silicone.

14. The method of any one of claims 10 to 13, further comprises providing a programmable logic controller (PLC), the PLC configured to control the movement of a pneumatic arm to exert the first force, the method optionally comprises configuring a digital counter to count a number of times the load exerts the first force on the removable portion and compare the number of times with a pre-determined number.

15. The method of claim 14, further comprises configuring the PLC to provide at least one of a visual and audio notification when the number of times exceeds the pre-determined number.
